# EUROPÄISCHE PATENTSCHRIFT

(11) **EP 1 016 859 B1**
(45) Veröffentlichungstag und Bekanntmachung des Hinweises auf die Patenterteilung: **04.10.2006**
(21) Anmeldenummer: 98124178.9
(22) Anmeldetag: 21.12.1998
(51) Int. Cl.: G01K 7/20

(54) **Temperaturbestimmungsvorrichtung**
Temperature determinating device
Dispositif de détermination de la température

(43) Veröffentlichungstag der Anmeldung: 05.07.2000
(73) Patentinhaber: Siebe Appliance Controls GmbH, 78559 Gosheim (DE)
(72) Erfinder: Anders, Claus, D-78559 Gosheim (DE)
(74) Vertreter: Vetter, Hans

(56) Entgegenhaltungen:
- GB-A- 1 296 682
- JP-A- 7 199 371
- JP-A- 61 145 424
- US-A- 3 517 556
- US-A- 5 568 044
- WOODWARD W S: "RTD TO RS-232 INTERFACE" ELECTRONIC DESIGN, Bd. 45, Nr. 1, 6. Januar 1997, Seite 163/164 XP000692269

## Beschreibung

Die Erfindung betrifft eine Temperaturbestimmungsvorrichtung mit einer Temperaturmeßschaltung, die ein elektrisches Meßsignal bewirkt, das zur Bestimmung der Temperatur dient.

Bei derartigen Temperaturbestimmungsvorrichtungen besteht das Problem häufig darin, dass die Differenzen des elektrischen Meßsignals innerhalb des zu messenden Temperaturbereiches gering sind, wodurch Meßungenauigkeiten entstehen. Dies gilt insbesondere für Temperaturbestimmungsvorrichtungen, die das Meßsignal digital auswerten. Um diesen Unzulänglichkeiten entgegenzuwirken, werden bei bekannten Vorrichtungen eine Verstärkung der Meßsignaldifferenzen und eine Pegelverschiebung vorgenommen. Dies hat jedoch zum einen einen großen Bauteilaufwand und die damit verbundenen Kosten zur Folge, und zum anderen sind hier weitere toleranzbehaftete Bauteile im Einsatz, so dass es hier zu weiteren Ungenauigkeiten bei der Temperaturbestimmung kommen kann.

Aus der JP 611 45 424 ist eine Temperaturbestimmungsvorrichtung bekannt mit einer einen Temperatursensor enthaltenden Temperaturmessschaltung, die ein elektrisches Messsignal bewirkt, das zur Bestimmung der Temperatur dient; mit einer Steuer- und Auswerteeinrichtung, die ein das Messsignal beinflussendes, an der Temperaturmessschaltung anliegendes Steuersignal erzeugt und die das Messsignal mit einem vorgegebenen Sollwert vergleicht und in Abhängigkeit vom Vergleichsergebnis das Steuersignal variiert, bis das Messsignal und der Sollwert im Wesentlichen übereinstimmen, wobei das Steuersignal als Mass für die Temperatur dient und zur Temperaturbestimmung ausgewertet wird. Diese Vorrichtung arbeitet mit analoger Gleichspannung.

Es ist die Aufgabe der vorliegenden Erfindung, eine Temperaturbestimmungsvorrichtung zu schaffen, die mit geringem Aufwand eine exakte Temperaturbestimmung ermöglicht.

Diese Aufgabe wird erfindungsgemäß durch eine Temperaturbestimmungsvorrichtung mit den Merkmalen des Anspruchs 1 gelöst.

Das Steuersignal kann in einfacher Weise von der Steuer- und Auswerteeinrichtung mit einer großen Genauigkeit erzeugt werden. Die Temperaturbestimmung erfolgt nicht unmittelbar durch die Erfassung des Meßsignals, sondern dieses wird durch die Variation des Steuersignals so lange geändert, bis es einem bekannten, vorgebbaren Sollwert entspricht. Über das bei Übereinstimmung von Sollwert und Meßsignal erzeugte Steuersignal kann die Steuer- und Auswerteeinrichtung dann die von der Temperaturmeßschaltung ermittelt Temperatur bestimmen. Bei dem Steuersignal handelt es sich in vorteilhafter Weise um ein periodisches Signal, insbesondere um ein pulsförmiges Gleichspannungssignal. Ein solches Signal kann von der Steuer- und Auswerteeinrichtung sehr einfach erzeugt werden.

Weitere vorteilhafte Ausgestaltungen der erfindungsgemäßen Temperaturbestimmungsvorrichtung gehen aus den Unteransprüchen hervor.

Zweckmäßigerweise weist die Temperaturmeßschaltung einen Temperatursensor, insbesondere einen temperaturabhängigen Widerstand, auf. Diese sind beispielsweise für einen Temperaturbereich von 0 - 250° C geeignet und ermöglichen einen einfachen und kostengünstigen Aufbau der Temperaturmeßschaltung.

Bei dieser Ausführung kann die am Temperatursensor anliegende Spannung das Meßsignal darstellen. Insbesondere ist hierbei in Reihe zum Temperatursensor ein Vorwiderstand geschaltet. Bei Verwendung eines temperaturabhängigen Widerstands als Temperatursensor erhält man hierdurch einen einfachen Spannungsteiler.

Weiterhin vorteilhaft ist es, wenn die Steuer- und Auswerteeinrichtung ein Mittelwertbildungsglied aufweist, das zur Mittelwertbildung des Meßsignals dient. Auf diese Weise können Abweichungen des Meßsignals besser ausgeglichen werden.

Dieses Mittelwertbildungsglied kann von einem insbesondere passiven Tiefpaß gebildet sein. Bei einer besonders einfach ausgeführten Variante ist es möglich, den Tiefpaß durch ein RC-Glied zu realisieren.

Zweckmäßig ist es außerdem, wenn die Steuer- und Auswerteeinrichtung einen AD-Wandler enthält, der das Meßsignal bzw. das gemittelte Meßsignal zur weiteren Verarbeitung bzw. Auswertung digitalisiert. Hierdurch besteht die Möglichkeit einer äußerst exakten und fehlerunanfälligen Verarbeitung oder Auswertung des Meßsignals.

Bei einer weiteren vorteilhaften Ausführung enthält die Steuer- und Auswerteeinrichtung einen Mikro-Controller, der das Meßsignal bzw. das gemittelte Meßsignal auswertet und das Steuersignal erzeugt. Derartige Mikro-Controller sind heutzutage handelsüblich erhältliche Bauteile. Sie gewährleisten eine hohe Flexibilität, so dass in Abhängigkeit von der Programmierung des Mikro-Controllers verschiedene Anwendungen für die Temperaturbestimmungsvorrichtung möglich sind.

Ein besonders geringer Aufwand läßt sich dabei dadurch realisieren, dass der AD-Wandler Bestandteil des Mikro-Controllers ist.

Es ist auch zweckmäßig, wenn das Steuersignal die Referenzspannung für die Temperaturmeßschaltung darstellt, so dass durch einfaches Erhöhen bzw. Absenken der Referenzspannung entsprechend der Meßsignalpegel erhöht bzw. abgesenkt werden kann. Es besteht hierdurch die Möglichkeit, ein Propotionalität zwischen Steuersignal und Meßsignal zu erreichen.

Es ist auch vorteilhaft, wenn zur Beeinflussung des Meßsignals der Mittelwert des an der Temperaturmeßschaltung anliegenden Steuersignals verändert wird. Dies kann dadurch erreicht werden, dass bei Einsatz eines pulsförmigen Gleitspannungssignals als Steuersignal die Pulsbreite variiert wird. Eine derartigen Änderung kann mittels der Steuer- und Auswerteeinrichtung problemlos erreicht werden.

Zweckmäßig ist es ebenfalls, wenn die Steuer- und Auswerteeinrichtung in Abhängigkeit von der ermittelten Temperatur ein entsprechendes, insbesondere digitales Ausgangssignal erzeugen kann. Je nach Anwendungsfall ist es zum Beispiel möglich, über das Ausgangssignal ein Display zur Temperaturanzeige anzusteuern oder beim Erreichen einer bestimmten Temperatur ein Schaltsignal auszugeben. Die Art des Ausgangssignals hängt insbesondere vom Anwendungsfall der Temperaturbestimmungsvorrichtung ab und ist grundsätzlich beliebig.

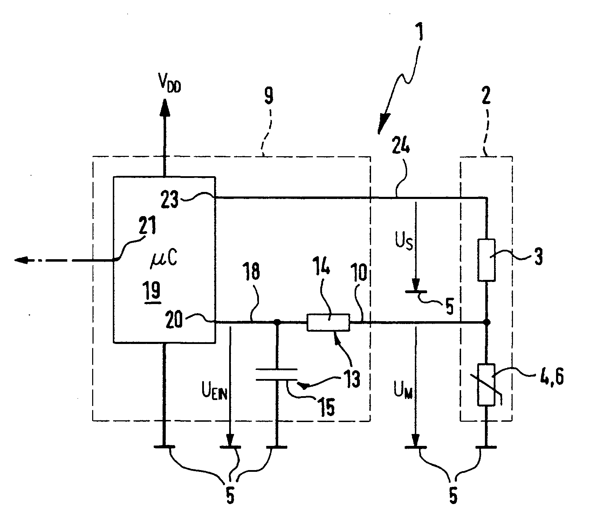

Im folgenden wird die erfindungsgemäße Temperaturbestimmungsvorrichtung anhand eines Ausführungsbeispiels näher erläutert. Die einzige Figur zeigt ein Blockschaltbild des Ausführungsbeispiels der Temperaturbestimmungsvorrichtung.

In der Figur ist ein erstes Ausführungsbeispiel einer Temperaturbestimmungsvorrichtung 1 gezeigt. Sie weist eine Temperaturmeßschaltung 2 auf, die beispielsgemäß von einer Reihenschaltung eines Vorwiderstandes 3 und eines temperaturabhängigen Widerstandes 4 gebildet ist. Der temperaturabhängige Widerstand 4 ist mit seinem anderen Pol mit der Masse 5 verbunden.

Der Vorwiderstand 3 und der temperaturabhängige Widerstand 4 stellen somit eine Spannungsteilerschaltung dar. Der temperaturabhängige Widerstand 4 bildet einen Temperatursensor 6 und kann sowohl einen negativen Temperaturkoeffizienten (NTC) als auch einen positiven Temperaturkoeffizienten (PTC) aufweisen. Bei dem hier dargestellten Ausführungsbeispiel ist der temperaturabhängige Widerstand 4 in Form eines PTC-Widerstands realisiert.

Die Temperaturbestimmungsvorrichtung 1 verfügt des weiteren über eine Steuer- und Auswerteeinrichtung 9, auf deren Funktion später noch näher eingegangen wird. Sie liefert die Referenzspannung U_{S} für die Temperaturmeßschaltung 2 und ist außerdem mit dem Mittelabgriff des Spannungsteilers 3, 4 zur Erfassung der am temperaturabhängigen Widerstand 4 anliegenden Spannung U_{M} über eine Erfassungsleitung 10 verbunden.

Die Steuer- und Auswerteeinrichtung 9 verfügt über ein Mittelwertbildungsglied 13, das mit der Erfassungsleitung 10 verbunden ist. Das Mittelwertbildungsglied 13 wird beim dargestellten Ausführungsbeispiel von einem passiven Tiefpaß gebildet. Dieser besteht beispielsgemäß aus einer Reihenschaltung von einem Tiefpaßwiderstand 14 und einem Tiefpaßkondensator 15, der mit seinem vom Tiefpaßwiderstand 14 abgewandten Pol mit Masse 5 verbunden ist. Der Tiefpaßwiderstand 14 und der Tiefpaßkondensator 15 stellen mithin ein sogenanntes RC-Glied dar.

Der Verknüpfungspunkt zwischen dem Tiefpaßwiderstand 14 und dem Tiepaßkondensator 15 ist über eine Eingangsleitung 18 mit einem nicht näher dargestellten AD-Wandler verbunden, der in den beim Ausführungsbeispiel vorgesehenen Mikro-Controller 19 integriert ist.

In Abwandlung hierzu wäre es selbstverständlich ebenfalls möglich, den AD-Wandler separat vom Mikro-Controller 19 vorzusehen.

Der Mikro-Controller 19 ist Bestandteil der Steuer- und Auswerteeinrichtung 9 und erfaßt über einen Eingang 20 die an der Eingangsleitung 18 anliegende Spannung U_{Ein}. Der Mikro-Controller 19 ist zur Versorgung an die Versorgungsspannung V_{DD} und an die Masse 5 angeschlossen. Er verfügt außerdem über wenigstens einen Ausgang 21, über den beispielsweise zur Ansteuerung oder Weiterverarbeitung dienende Ausgangssignale an nicht näher dargestellte weitere Baueinheiten ausgegeben werden können.

Der Mikro-Controller 19 verfügt außerdem über einen Steuerausgang 23, der über eine Ausgangsleitung 24 mit der Temperaturmeßschaltung 2 und beispielsgemäß mit dem Vorwiderstand 3 verbunden ist. Die Ausgangsleitung 24 stellt mithin gleichzeitig die Ausgangsleitung der Steuer- und Auswerteeinrichtung 9 dar.

Im folgenden wird nunmehr die Funktion der Temperaturbestimmungsvorrichtug 1 im einzelnen erläutert.

Über die Ausgangsleitung 24 wird an den Spannungsteiler 3, 4 der Temperaturmeßschaltung 2 ein Steuersignal in Form einer Steuerspannung U_{S} angelegt. Bei der Steuerspannung U_{S} handelt es sich um ein pulsförmiges Gleichspannungssignal, so daß ein periodisches Steuersignal vorliegt. Über den Steuerausgang 23 des Mikro-Controllers 19 kann der Mittelwert des pulsförmigen Gleichspannungssignals U_{S} und damit der Mittelwert der am Spannungsteiler 3, 4 der Temperaturmeßschaltung 2 anliegenden Referenzspannung verändert werden. Beim Ausführungsbeispiel wird diese Mittelwertänderung dadurch erreicht, daß die Pulsbreite bzw. die Zeit zwischen zwei Gleichspannungsimpulsen variiert wird. Dies hat den Vorteil, daß der Mikro-Controller 19 zur Veränderung des Mittelwertes der Steuerspannung U_{S} nicht unterschiedliche Gleichspannungswerte liefern muß, sondern daß durch Taktung ein pulsförmiges Gleichspannungssignal generiert wird, dessen Mittelwert auf einfache Weise durch Variation der Impulsdauer bzw. der Pausenzeiten zwischen zwei Impulsen verändert werden kann.

In Abhängigkeit von der gemessenen Temperatur ändert sich der Widerstandswert des temperaturabhängigen Widerstands 4 der Temperaturmeßschaltung 2. Proportional zum Widerstandswert des temperaturabhängigen Widerstandes 4 ändert sich die an ihm anliegende Spannung U_{M}, die im vorliegenden Fall das Meßsignal darstellt.

Um möglichst genaue Meßergebnisse zu erhalten, sollte der Widerstandswert des Vorwiderstands 3 sehr präzise gewählt werden. Anstelle des temperaturabhängigen Widerstandes 4 könnte in einer weiteren Ausführungsform auch ein anderer Temperatursensor 6 zum Einsatz kommen.

Das in Form der Spannung U_{M} vorliegende elektrische Meßsignal dient zur Bestimmung der Temperatur durch die Steuer- und Auswerteeinrichtung 9. Zunächst wird durch das Mittelwertbildungsglied 13 der Mittelwert des Meßsignals U_{M} gebildet und über die Eingangsleitung 18 dem Eingang 20 des Mikro-Controllers 19 zugeführt. Demnach entspricht die an der Eingangsleitung 18 anliegende Spannung U_{Ein} dem Mittelwert des Meßsignals U_{M}.

Die Mittelwertbildung des Meßsignals U_{M} dient beim Ausführungsbeispiel insbesondere dazu, die Schwankungen in diesem Meßsignal auf Grund der am Spannungsteiler 3, 4 anliegenden pulsförmigen Gleichspannung U_{S} auszugleichen. Auch durch andere Einwirkungen verursachte Abweichungen werden durch die Mittelwertbildung besser ausgeglichen.

Das Mittelwertbildungsglied 13 könnte abweichend von der hier beschriebenen Ausführungsform auch auf beliebige andere Weise realisiert sein. Beispielsweise könnte auch ein aktiver Tiefpaß mit einem Operationsverstärker eingesetzt werden.

Das gemittelte Meßsignal, also die am Eingang 20 des Mikro-Controllers anliegende Spannung U_{Ein}, wird von dem im Mikro-Controller 19 enthaltenen AD-Wandler in ein digitales Signal zur weiteren Verarbeitung bzw. Auswertung im Mikro-Controller 19 umgewandelt. Beispielsgemäß ist ein AD-Wandler mit 8 Bit vorgesehen, so daß der gesamte Meßbereich in 256 Stufen unterteilt werden kann. Die Genauigkeit kann selbstverständlich durch eine Erhöhung der BitZahl des AD-Wandlers vergrößert werden.

Der Mikro-Controller vergleicht das gemittelte und digitalisierte Meßsignal mit einem vorgegebenen bzw. vorgebbaren Sollwert. über das am Steuerausgang 23 erzeugte Steuersignal wird das Meßsignal beeinflußt, bis es im wesentlichen mit dem bekannten Sollwert übereinstimmt. Ist das Meßsignal geringer als der Sollwert, so erhöht der Mikro-Controller 19 den Mittelwert der als Steuersignal dienenden getakteten Gleichspannung U_{S}, was zur Folge hat, daß das Meßsignal U_{M} und somit auch die am Mikro-Controller anliegende Spannung U_{Ein} ansteigen. Ist das Meßsignal größer als der Sollwert, wird entsprechend der Mittelwert der das Steuersignal darstellenden Spannung U_{S} gesenkt.

Die Dynamik dieser Regelung kann dahingehend verbessert werden, daß bei großen Abweichungen zwischen dem Sollwert und dem Meßsignal eine entsprechend größere Änderung des Steuersignals vorgenommen wird, um die Regelungszeit zur Anpassung des Meßsignals an den Sollwert weiter zu minimieren.

Das Meßsignal U_{M} ändert sich, wie bereits beschrieben, in Abhängigkeit von der gemessenen Temperatur. Es wird bei einer Abweichung vom Sollwert durch die entsprechende Änderung des Steuersignals automatisch wieder an den Sollwert angeglichen. Somit stellt das Steuersignal selbst ein Maß für die Temperatur dar und dient beim Ausführungsbeispiel zu deren Bestimmung. Der Mikro-Controller 19 kann zu dem von ihm generierten Steuersignal ein entsprechendes Ausgangssignal an seinem Ausgang 21 erzeugen, das in Abhängigkeit von der Anwendung eine beliebige Funktion haben kann. Beispielsweise kann das Ausgangssignal an ein Display weitergegeben werden, das ständig die gemessene Temperatur anzeigt. Des weiteren besteht die Möglichkeit, daß der Mikro-Controller alternativ oder zusätzlich zur Anzeige der Temperatur lediglich beim Erreichen von bestimmten Temperaturschwellen ein Ausgangssignal hervorruft, wie etwa beim Überschreiten einer Höchsttemperatur bzw. beim Unterschreiten einer Mindesttemperatur. Die Anzahl der generierten Ausgangssignale ist grundsätzlich beliebig und hängt im wesentlichen von der Bauart des Mikro-Controllers 19 und von dessen Programmierung ab. Die Möglichkeiten sind hier sehr vielfältig und dem Fachmann auch von anderen Anwendungen her hinlänglich bekannt.

## Patentansprüche

1. Temperaturbestimmungsvorrichtung, mit einer einen Temperatursensor (6) enthaltenden Temperaturmeßschaltung (2), die ein elektrisches Meßsignal bewirkt, das zur Bestimmung der Temperatur dient, mit einer Steuer- und Auswerteeinrichtung (9), die ein das Meßsignal (U_{M}) beeinflussendes, an der Temperaturmeßschaltung (2) anliegendes Steuersignal (U_{S}) erzeugt und die das Meßsignal (U_{M})oder ein daraus gemitteltes Meßsignal mit einem vorgegebenen Sollwert vergleicht und in Abhängigkeit vom Vergleichsergebnis das Steuersignal (U_{S}) variiert, bis das Meßsignal (U_{M}) oder das gemittelte Meßsignal und der Sollwert im Wesentlichen übereinstimmen, wobei das Steuersignal (U_{S}) als Maß für die Temperatur dient und die Steuer- und Auswerteeinrichtung (9) eingerichtet ist zur Auswertung des Steuersignals zur Temperaturbestimmung, wobei es sich bei dem Steuersignal (U_{S}) um ein periodisches Signal handelt.

2. Temperaturbestimmungsvorrichtung nach Anspruch 1, **dadurch gekennzeichnet, dass** der Temperatursensor ein temperaturabhängiger Widerstand (4) ist.

3. Temperaturbestimungsvorrichtung nach Anspruch 2, **dadurch gekennzeichnet, dass** die am Temperatursensor (6) anliegende Spannung das Meßsignal (U_{M}) darstellt.

4. Temperaturbestimmungsvorrichtung nach Anspruch 2 oder 3, **dadurch gekennzeichnet, dass** die Temperaturmeßschaltung (2) einen Vorwiderstand (3) enthält, der in Reihe zum Temperatursensor (6) geschaltet ist.

5. Temperaturbestimmungsvorrichtung nach einem der Ansprüche 1 bis 4, **dadurch gekennzeichnet, dass** die Steuer- und Auswerteeinrichtung (9) ein Mittelwertbildungsglied (13) aufweist, das zur Mittelwertbildung des Meßsignals (U_{M}) dient.

6. Temperaturbestimmungsvorrichtung nach Anspruch 5, **dadurch gekennzeichnet, dass** das Mittelwertbildungsglied (13) von einem insbesondere passiven Tiefpaß gebildet ist.

7. Temperaturbestimmungsvorrichtung nach Anspruch 6, **dadurch gekennzeichnet, dass** der Tiefpaß von einem RC-Glied (14, 15) gebildet ist.

8. Temperaturbestimmungsvorrichtung nach einem der Ansprüche 1 bis 7, **dadurch gekennzeichnet, dass** die Steuer- und Auswerteeinrichtung (9) einen AD-Wandler enthält, der das Meßsignal (U_{M}) bzw. das gemittelte Meßsignal (U_{Ein}) zur weiteren Verarbeitung bzw. Auswertung digitalisiert.

9. Temperaturbestimmungsvorrichtung nach einem der Ansprüche 1 bis 8, **dadurch gekennzeichnet, dass** die Steuer- und Auswerteeinrichtung (9) einen Mikro-Controller (19) enthält, der das Meßsignal (U_{M}) bzw. das gemittelte Meßsignal (U_{Ein}) auswertet und das Steuersignal (U_{S}) erzeugt.

10. Temperaturbestimmungsvorrichtung nach Anspruch 9 in Verbindung mit Anspruch 8, **dadurch gekennzeichnet, dass** der AD-Wandler Bestandteil des Mikro-Controllers (19) ist.

11. Temperaturbestimmungsvorrichtung nach einem der Ansprüche 1 bis 10, **dadurch gekennzeichnet, dass** das Steuersignal (U_{S}) die Referenzspannung für die Temperaturmeßschaltung (2) darstellt.

12. Temperaturbestimmungsvorrichtung nach einem der Ansprüche 1 bis 11, **dadurch gekennzeichnet, dass** das periodische Signal ein pulsförmiges Gleichspannungssignal ist.

13. Temperaturbestimmungsvorrichtung nach einem der Ansprüche 1 bis 12, **dadurch gekennzeichnet, dass** zur Beeinflussung des Meßsignals (U_{M}) der Mittelwert des an der Temperaturmeßschaltung (2) anliegenden Steuersignals (U_{S}) veränderbar ist.

14. Temperaturbestimmungsvorrichtung nach Anspruch 13 in Verbindung mit Anspruch 12, **dadurch gekennzeichnet, dass** zur Veränderung des Mittelwertes des Steuersignals (U_{S}) die Vorrichtung so eingerichtet ist, dass sie eine Variation der Pulsbreite des pulsförmigen Gleichspannungssignals ermöglicht.

15. Temperaturbestimmungsvorrichtung nach einem der Ansprüche 1 bis 14, **dadurch gekennzeichnet, dass** die Steuer- und Auswerteeinrichtung (9) in Abhängigkeit von der ermittelten Temperatur ein entsprechendes, insbesondere digitales Ausgangssignal erzeugen kann.

## Claims

1. Temperature determination unit, with a temperature measuring circuit (2) containing a temperature sensor (6), which effects an electrical measuring signal used for determining temperature, with a control and evaluation unit (9) which generates at the temperature measuring circuit (2) a control signal (U_{S}) influencing the measuring signal (U_{M}) and which compares the measuring signal (U_{M}), or a measuring signal averaged therefrom, with a prescribed specified value and, depending on the compared result, varies the control signal (U_{S}) until the measuring signal (U_{M}) or the averaged measuring signal and the specified value are substantially in agreement, wherein the control signal (U_{S}) is used as a measure for the temperature, and the control and evaluation unit (9) is set up to evaluate the control signal for temperature determination, wherein the control signal (U_{S}) is a periodic signal.

2. Temperature determination unit according to claim 1, **characterised in that** the temperature sensor is a temperature-dependent resistor (4).

3. Temperature determination unit according to claim 2, **characterised in that** the voltage applied to the temperature sensor (6) represents the measuring signal (U_{M}).

4. Temperature determination unit according to claim 2 or 3, **characterised in that** the temperature measuring circuit (2) contains a series resistor (3) which is connected in series to the temperature sensor (6).

5. Temperature determination unit according to any of claims 1 to 4, **characterised in that** the control and evaluation unit (9) has an averaging element (13), which is used for averaging the measuring signal (U_{M}).

6. Temperature determination unit according to claim 5, **characterised in that** the averaging element (13) is formed by a low-pass filter, in particular one which is passive.

7. Temperature determination unit according to claim 6, **characterised in that** the low-pass filter is formed by an RC element (14, 15).

8. Temperature determination unit according to any of claims 1 to 7, **characterised in that** the control and evaluation unit (9) contains an A/D converter which digitalises the measuring signal (U_{M}) or the averaged measuring signal (U_{Ein}) for further processing and/or evaluation.

9. Temperature determination unit according to any of claims 1 to 8, **characterised in that** the control and evaluation unit (9) contains a micro-controller (19), which evaluates the measuring signal (U_{M}) or the averaged measuring signal (U_{Ein}) and generates the control signal (U_{S}).

10. Temperature determination unit according to claim 9 in conjunction with claim 8, **characterised in that** the A/D converter is an integral part of the micro-controller (19).

11. Temperature determination unit according to any of claims 1 to 10, **characterised in that** the control signal (U_{S}) represents the reference voltage for the temperature measuring circuit (2).

12. Temperature determination unit according to any of claims 1 to 11, **characterised in that** the periodic signal is a pulse-shaped DC voltage signal.

13. Temperature determination unit according to any of claims 1 to 12, **characterised in that** the mean value of the control signal (U_{S}) applied to the temperature measuring circuit (2) may be varied in order to influence the measuring signal (U_{M}).

14. Temperature determination unit according to claim 13 in conjunction with claim 12 **characterised in that**, in order to change the mean value of the control signal (U_{S}), the unit is set up so as to facilitate a variation of the pulse width of the pulse-shaped DC voltage signal.

15. Temperature determination unit according to any of claims 1 to 14 **characterised in that**, depending on the temperature determined, the control and evaluation unit (9) is able to generate a suitable output signal, in particular digital.

## Revendications

1. Dispositif de détermination de la température avec un circuit de mesure de la température (2) comprenant un capteur de température (6) qui produit un signal électrique de mesure servant à la détermination de la température et avec un dispositif de commande et d'exploitation (9) qui génère un signal de commande (U_{S}), lequel influence le signal de mesure (U_{M}) et lequel est présent sur le circuit de mesure de la température (2), et qui compare le signal de mesure (U_{M}) ou un signal de mesure qui en est extrait en tant que moyenne avec une valeur de consigne prédéterminée en variant le signal de commande (U_{S}) en fonction du résultat de la comparaison jusqu'à ce que le signal de mesure (U_{M}) ou le signal de mesure qui en est extrait en tant que moyenne et la valeur de consigne soient sensiblement concordants, le signal de commande (U_{S}) servant de mesure pour la température et le dispositif de commande et d'exploitation (9) étant agencé pour l'exploitation du signal de commande en vue de la détermination de la température et le signal de commande (U_{S}) étant un signal périodique.

2. Dispositif de détermination de la température selon la revendication 1 , **caractérisé en ce que** le capteur de température est une résistance qui dépend de la température (4).

3. Dispositif de détermination de la température selon la revendication 2, **caractérisé en ce que** la tension qui est présente sur le capteur de température (6) représente le signal de mesure (U_{M}).

4. Dispositif de détermination de la température selon la revendication 2 ou 3, **caractérisé en ce que** le circuit de mesure de la température (2) contient une résistance préliminaire (3) qui est branchée en série avec le capteur de température (6).

5. Dispositif de détermination de la température selon l'une quelconque des revendications 1 à 4, **caractérisé en ce que** le dispositif de commande et d'exploitation (9) comprend un élément de formation de valeur moyenne (13) qui sert à former la valeur moyenne du signal de mesure (U_{M}).

6. Dispositif de détermination de la température selon la revendication 5, **caractérisé en ce que** l'élément de formation de valeur moyenne (13) est constitué d'un passe-bas qui est en particulier passif.

7. Dispositif de détermination de la température selon la revendication 6, **caractérisé en ce que** le passe-bas est formé par un circuit RC (14, 15).

8. Dispositif de détermination de la température selon l'une quelconque des revendications 1 à 7, **caractérisé en ce que** le dispositif de commande et d'exploitation (9) comprend un convertisseur AD qui digitalise le signal de mesure (U_{M}) ou le signal de mesure dont la moyenne a été formée (U_{Ein}) pour un traitement ou pour une exploitation ultérieures.

9. Dispositif de détermination de la température selon l'une quelconque des revendications 1 à 8, **caractérisé en ce que** le dispositif de commande et d'exploitation (9) contient un microcontrôleur (19) qui exploite le signal de mesure (U_{M}) ou le signal de mesure dont la moyenne a été formée (U_{Ein}) et qui génère le signal de commande (U_{S}).

10. Dispositif de détermination de la température selon la revendication 9 en liaison avec la revendication 8, **caractérisé en ce que** le convertisseur AD est une partie constituante du microcontrôleur (19).

11. Dispositif de détermination de la température selon l'une quelconque des revendications 1 à 10, **caractérisé en ce que** le signal de commande (U_{S}) représente la tension de référence pour le circuit de mesure de la température (2).

12. Dispositif de détermination de la température selon l'une quelconque des revendications 1 à 11, **caractérisé en ce que** le signal périodique est un signal à tension continue en forme de pulsation.

13. Dispositif de détermination de la température selon l'une quelconque des revendications 1 à 12, **caractérisé en ce que**, pour influencer le signal de mesure (U_{M}), il est possible de modifier la valeur moyenne du signal de commande (U_{S}) qui est présent dans le circuit de mesure de la température (2).

14. Dispositif de détermination de la température selon la revendication 13 en liaison avec la revendication 12, **caractérisé en ce que**, pour modifier la valeur moyenne du signal de commande (U_{S}), le dispositif est configuré de façon à permettre une variation de la largeur d'impulsion du signal de tension continue en forme de pulsation.

15. Dispositif de détermination de la température selon l'une quelconque des revendications 1 à 14, **caractérisé en ce que** le dispositif de commande et d'exploitation (9) peut, en fonction de la température qui a été déterminée, générer un signal de sortie correspondant qui est en particulier digital.
